# EUROPÄISCHE PATENTSCHRIFT

(11) **EP 1 870 163 B1**
(45) Veröffentlichungstag und Bekanntmachung des Hinweises auf die Patenterteilung: **20.04.2016**
(21) Anmeldenummer: 07110263.6
(22) Anmeldetag: 14.06.2007
(51) Int. Cl.: B04B 1/20, B04B 9/04

(54) **Schneckenzentrifuge mit Direktantrieb mittels Asychronmotor**
Helical conveyor centrifuge having direct drive by asynchronous motor
Entraînement direct d'une centrifugeuse à vis sans fin avec un moteur asynchrone

(30) Priorität: 23.06.2006 DE 102006028803
(43) Veröffentlichungstag der Anmeldung: 26.12.2007
(73) Patentinhaber: GEA Mechanical Equipment GmbH, 59302 Oelde (DE)
(72) Erfinder: Overberg, Martin, 33442 Herzebrock-Clarholz (DE); Beyer, Joachim, 59302 Ennigerloh (DE)
(74) Vertreter: Dantz, Jan Henning

(56) Entgegenhaltungen:
- DE-A1- 3 325 566
- DE-A1- 10 334 370
- US-A1- 2004 232 791

## Beschreibung

Die Erfindung betrifft eine Schneckenzentrifuge nach dem Oberbegriff des Anspruches 1.

Schneckenzentrifugen sind aus dem Stand der Technik an sich bekannt. Sie werden in der Regel als Vollmantel-Schneckenzentrifugen oder als Siebmantelzentrifugen ausgebildet.

Die DE 198 05 374 C1 offenbart einen Dekanter mit einem mehrstufigen Umlaufgetriebe.

Die DE 10 2004 034 409 A1 offenbart einen Dekanter mit einem mitdrehenden Motor für die Schnecke, der als Torquemotor ausgeführt ist. Die Trommel wird über einen Riemen angetrieben.

In der DE 28 49 547 A1 wird vorgeschlagen, mit einem kleinen Motor die Gesamteinheit aus einer Schnecke und einer Trommel auf die Betriebsdrehzahl zu beschleunigen und erst dann einen Hauptmotor zuzuschalten.

In der DE 603 02 219 T2 wird vorgeschlagen, zum Antrieb der Schnecke und der Trommel eines Dekanters zwei axial hintereinander angeordnete Synchronmotoren mit Permanentmagneten über konzentrisch angeordnete Wellen anzutreiben. Damit ist es bekannt, einen ersten Elektromotor (einen Trommelmotor) und einen zweiten Elektromotor (einen Regelmotor) in axialer Verlängerung der Trommel und des Getriebes direkt auf den jeweiligen Antriebswellen für die Trommel und oder das Getriebe zur Erzeugung der Differenzdrehzahl anzuordnen. Nachteilig an dieser Anordnung ist, dass sie relativ lang ist.

Zum technologischen Hintergrund werden noch die GB 379 666, die EP 0 798 046 A1 und die WO 94/23 223 A1 genannt.

Darüber hinaus ist es aus der DE 103 34 370 A1 auch bekannt, eine Trommel direkt mit linearmotorartigen bzw. synchron-schrittmotorartigen Anordnungen anzutreiben, die um die Trommel oder beispielsweise außen um einen Getriebekasten gelegt werden, wobei die Trommel mittels eines gesteuerten, schrittweise fortschreitenden elektromagnetischen Wanderfeldes in Drehung versetzt wird. Damit wird hier ein Synchronmotor zum Antrieb der Trommel eingesetzt. Diese Anordnung ist kompakt, aber relativ aufwendig.

Die Erfindung hat vor diesem Hintergrund die Aufgabe, eine sowohl in Hinsicht auf den Bauraum als die Herstellungskosten weiter optimierte Schneckenzentrifuge mit einem Elektromotor zum Antrieb zumindest der Trommel zu realisieren.

Die Erfindung löst diese Aufgabe durch den Gegenstand des Anspruches 1.

Danach ist der Elektromotor als Asynchronmotor ausgebildet, dessen Motorläufer direkt auf einem umlaufenden Getriebegehäuse der Getriebeanordnung angeordnet ist, und die Ständerwicklung ist in einem Motorgehäuse angeordnet, das mit einem Lagergehäuse der Trommellagerung und/oder dem Maschinengestell drehfest verbunden ist.

Da kein Linearmotor auf dem Außenumfang des Getriebes angeordnet wird, sondern ein Standarddrehstrom-Asynchronmotor eingesetzt wird, baut die Konstruktion besonders einfach, kostengünstig und kompakt.

Wider Erwarten ist es möglich, auch mit einem Asynchronmotor ein genügendes Drehmoment zu erzeugen, wenn dieses auf dem Außenumfang der ersten Getriebestufe angeordnet wird.

Erfindungsgemäss ist das Motor-/ Antriebsgehäuse geschlossen ausgebildet und bietet so Schutz gegen aggressive Gase und Staub.

Vorteilhafte Ausgestaltungen sind den Unteransprüchen zu entnehmen.

Nachfolgend wird die Erfindung unter Bezug auf die Zeichnung anhand von Ausführungsbeispielen näher beschrieben. Es zeigt:
- Figur 1: eine schematische Darstellung einer Vollmantel-Schneckenzentrifuge mit ihrem Antrieb und
- Figur 2: eine Ausschnittsvergrößerung aus Figur 1.

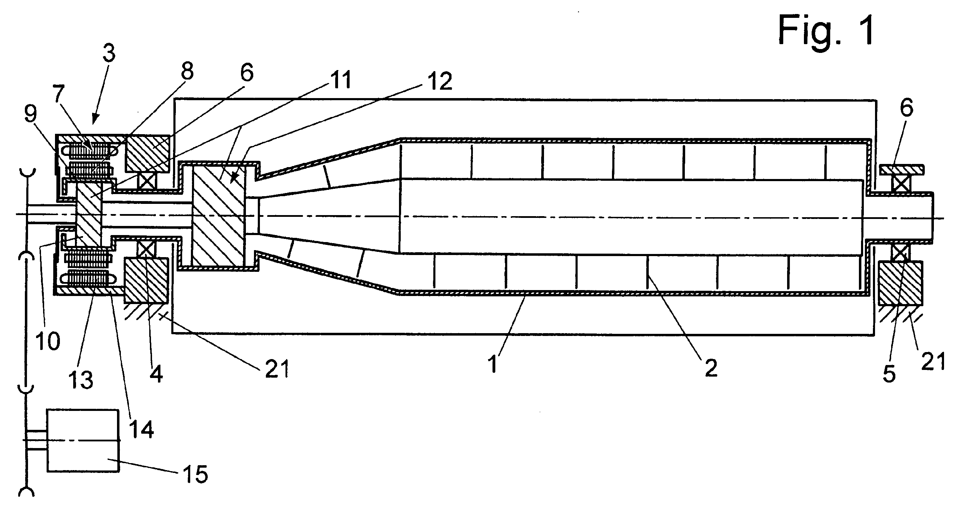

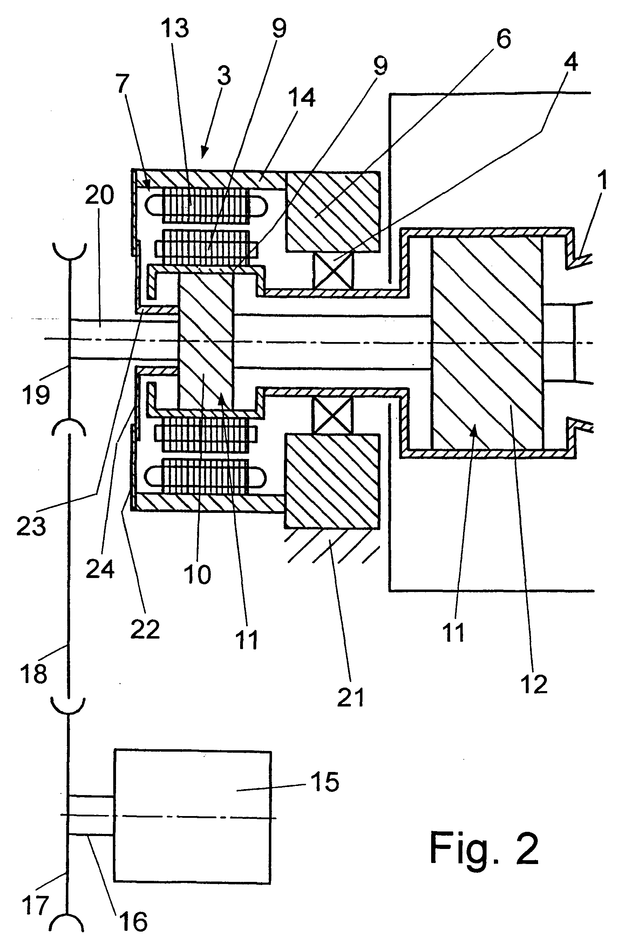

Figur 1 und Figur 2 zeigen jeweils eine Vollmantel-Schneckenzentrifuge mit einer drehbaren Trommel 1 mit vorzugsweise horizontaler Drehachse und einer innerhalb der Trommel 1 angeordneten ebenfalls drehbaren Schnecke 2, die einen Zentrifugenantrieb 3 zum Drehen der Trommel 1 und der Schnecke 2 aufweist.

Die Trommel weist eine Trommellagerung auf und ist zwischen einem antriebsseitigen und einem antriebsabgewandten Trommellager 4, 5 angeordnet und mit diesen Trommellagern 4, 5 in einem Maschinengestell 21 über ein Lagergehäuse 6 drehbar gelagert. Zum Antrieb der Trommel dient ein erster Elektromotor 7, der als Drehstrom-Asynchronmotor ausgebildet ist.

Dieser erste Elektromotor - nachfolgend auch Trommelmotor genannt - weist einen Motorläufer 8 auf, der direkt auf dem Außenumfang eines umlaufenden Getriebegehäuses 9 einer ersten Getriebestufe 10 oder eines ersten Getriebes einer Getriebeanordnung 11 angeordnet ist, welche die erste Getriebestufe 10 und eine zweite Getriebestufe 12 oder ein zweites Getriebe aufweist, wobei die erste Getriebestufe 10 oder das erste Getriebe und die zweite Getriebestufe 12 oder das zweite Getriebe wiederum in sich mehrstufig ausgebildet sein können.

Die erste Getriebestufe 10 und die zweite Getriebestufe 11 sind hier in vorteilhafter Weise auf den beiden axialen Seiten des antriebsseitigen Trommellagers 4 angeordnet. Alternative Ausgestaltungen sind denkbar.

Die Trommel 1 wird von dem umlaufenden Gehäuse 9 der ersten Getriebestufe 11 mitgenommen, mit dem sie drehfest verbunden ist.

Die Ständerwicklung 13 des Motors umgibt den Motorläufer 8. Sie ist in einem Motorgehäuse 14 angeordnet, das direkt als Teil des Lagergehäuses 6 ausgelegt oder mit diesem verbunden sein kann. Dies baut besonders kompakt. Es ist aber auch eine Verbindung mit einem anderen feststehenden, nicht rotierenden Teil ("Maschinengestell") möglich.

Durch die Anordnung des Asynchronmotors 7 direkt auf dem Außenumfang des umlaufenden Getriebegehäuses 9 der ersten Getriebestufe 10 oder des ersten Getriebes ergibt sich eine besonders kurze axiale Baulänge. Der Asynchronmotor 7 kann zudem im Wesentlichen aus handelsüblichen Teilen zusammengebaut werden.

Optimiert wird dieser Effekt dadurch, dass ein zweiter Elektromotor 15 vorzugsweise nicht in axialer Verlängerung des Asynchronmotors 7 angeordnet ist (was zwar theoretisch möglich ist), sondern in einer vertikalen Ebne mit dem Asynchronmotor, vorzugsweise unter dem Asynchronmotor, wobei die Abtriebswelle 16 zweiten Elektromotors 15 vorzugsweise über ein Umschlingungsgetriebe mit einer ersten Riemenscheibe 17, einem Antriebsriemen 18 und einer zweiten Riemenscheibe 19 mit einer Eingangswelle 20 der ersten Getriebestufe 10 des ersten Getriebes verbunden ist. Der nach dem Stand der Technik benötigte zusätzliche axiale Bauraum für den Regelmotor 15 für die Schneckendifferenzdrehzahl kann damit gespart werden.

Mit der erfindungsgemäßen Konstruktion ist es möglich, den Asynchronmotor 7 als Trommelmotor ohne eigene Lager einzusetzen, der die Trommellager 4, 5 als eigenes Lager quasi mit nutzt.

Es ist ferner vorteilhaft, dass bei einer Aufteilung der Getriebestufen 10, 12 oder der beiden Getriebe axial beidseitig des antriebsseitigen Trommellagers 4b der Asynchronmotor 7 besonders nahe zum Haupttrommellager 4 plaziert werden kann. Alternative Ausgestaltungen sind denkbar (z.B. alle Getriebestufen auf einer Seite des Trommellagers 4).

Erfindungsgemäß ist zudem das Motorgehäuse 14 auf einfache Weise geschlossen in einer hohen Schutzart, insbesondere größer als **IP** 54 ausgebildet und bietet derart auch einen Schutz gegen aggressive Gase und Staub. Das Motorgehäuse bzw. der Motorraum können auch inertisiserbar ausgestaltet werden.

Die Kühlung des Asynchronmotors bzw. des Trommelmotors 7 kann beispielsweise durch eine Wasserkühlung realisiert werden. Ergänzend oder alternativ ist auch eine Fremdbelüftung denkbar.

Alternativ zur gewählten Darstellung mit den beiden parallel zueinander angeordneten Drehachsen des Trommelmotors und des Regelmotors ist es auch denkbar, den Regelmotor in axialer Verlängerung des Trommelmotors anzuordnen, was aber länger baut, so dass die Variante der Figuren 1 und 2 bevorzugt wird.

Besonders bevorzugt ist die erste Getriebestufe als Mehrwellen-, insbesondere Vierwellengetriebe ausgebildet, wobei vorzugsweise eine stillstehende Hohlwelle 23 vorgesehen ist, die mit einem Flanschabschnitt 24 drehfest an einer axialen Wandung 22 des Motorgehäuses 14 festgelegt ist. Auf diese Weise gelingt es einfach, das Motorgehäuse 14 gut abzudichten. Die Asynchronmaschine wird mit Drehstrom betrieben.

**Bezugszeichen**

| | |
|---|---|
| Trommel | 1 |
| Schnecke | 2 |
| Zentrifugenantrieb | 3 |
| Trommellager | 4 |
| Lagergehäuse | 6 |
| Elektromotor | 7 |
| Motorläufer | 8 |
| Gehäu0se | 9 |
| Vorstufe | 10 |
| Getriebeanordnung | 11 |
| Getriebestufe | 12 |
| Ständerwicklung | 13 |
| Motorgehäuse | 14 |
| Regelmotor | 15 |
| Abtriebswelle | 16 |
| Riemenscheibe | 17 |
| Antriebsriemen | 18 |
| Riemenscheibe | 19 |
| Eingangswelle | 20 |
| Maschinengestell | 21 |
| Wandung | 22 |
| Hohlwelle | 23 |

## Patentansprüche

1. Schneckenzentrifuge, insbesondere Vollmantel- oder Siebmantel-Schneckenzentrifuge mit:
a) einer drehbaren Trommel (1) mit einer Trommellagerung mit einem Lagergehäuse (6)
b) einer innerhalb der Trommel (1) angeordneten, drehbaren Schnecke (2),
c) einem Maschinengestell (21),
d) einem Zentrifugenantrieb (3) zum Drehen von Trommel (1) und Schnecke (2), der derart ausgelegt ist, dass eine Differenzdrehzahl zwischen der Trommel (1) und der Schnecke (2) einstellbar ist,
e) wobei der Zentrifugenantrieb (3) folgendes aufweist:
1. wenigstens einen zumindest zum Antrieb der Trommel (1) ausgelegten Elektromotor (7) und
2. eine Getriebeanordnung (11),
**dadurch gekennzeichnet, dass**
f) der Elektromotor als Asynchronmotor (7) ausgebildet ist, dessen Motorläufer (8) direkt auf einem umlaufenden Getriebegehäuse (9) der Getriebeanordnung (11) angeordnet ist, und
g) die Ständerwicklung (13) in einem Motorgehäuse (14) angeordnet ist, das mit dem Lagergehäuse (6) der Trommellagerung und/oder dem Maschinengestell (21) drehfest verbunden ist, und
h) das Motor-/Antriebsgehäuse (14) geschlossen ausgebildet ist.

2. Schneckenzentrifuge nach Anspruch 1, **dadurch gekennzeichnet, dass** die Getriebeanordnung (11) zwei- oder mehrstufig ausgebildet ist, wobei wenigstens eine oder mehrere Getriebestufen (10) in dem umlaufenden Gehäuse (9) angeordnet sind.

3. Schneckenzentrifuge nach einem der vorstehenden Ansprüche, **dadurch gekennzeichnet, dass** die Getriebeanordnung (11)wenigstens zwei Getriebe aufweist, wobei wenigstens eine oder mehrere Getriebestufen in dem umlaufenden Gehäuse (9) angeordnet sind.

4. Schneckenzentrifuge nach einem der vorstehenden Ansprüche, **dadurch gekennzeichnet, dass** neben dem Elektromotor (7) zum Antrieb der Trommel ein weiterer Elektromotor (15) vorgesehen ist, der als Regelmotor ausgebildet ist.

5. Schneckenzentrifuge nach Anspruch 4, **dadurch gekennzeichnet, dass** der Regelmotor (15) eine Abtriebswelle (16) aufweist, die parallel zur Trommeldrehachse angeordnet ist.

6. Schneckenzentrifuge nach einem der Ansprüche (4 oder 5), **dadurch gekennzeichnet, dass** der Regelmotor (15) parallel zum Elektromotor (7) mit diesem in einer Ebene angeordnet ist.

7. Schneckenzentrifuge nach einem der vorstehenden Ansprüche 4-6, **dadurch gekennzeichnet, dass** der Regelmotor (15) über ein Umschlingungsgetriebe mit einer Eingangswelle (20) der Getriebeanordnung (11) verbunden ist.

8. Schneckenzentrifuge nach einem der vorstehenden Ansprüche, **dadurch gekennzeichnet, daß** das Antriebsgehäuse (14) in einer Schutzart größer als IP 54 ausgebildet ist.

9. Schneckenzentrifuge nach einem der vorstehenden Ansprüche, **dadurch gekennzeichnet, daß** das Antriebsgehäuse (14) bzw. der Motorraum inertisierbar ausgebildet ist.

10. Schneckenzentrifuge nach einem der vorstehenden Ansprüche, **dadurch gekennzeichnet, dass** eine Kühleinrichtung zur Kühlung des Asynchronelektromotors (7) vorgesehen ist.

11. Schneckenzentrifuge nach Anspruch 10,**dadurch gekennzeichnet, dass** die Kühlung als Wasserkühlung ausgebildet ist.

12. Schneckenzentrifuge nach Anspruch 10, **dadurch gekennzeichnet, dass** die Kühleinrichtung als Fremdbelüftung ausgebildet ist.

13. Schneckenzentrifuge nach einem der Ansprüche 2 oder 3, **dadurch gekennzeichnet, dass** der Motorläufer (8) auf dem umlaufenden gemeinsamen Gehäuse (9) von zwei Getriebestufen der mehrstufigen Getriebeanordnung (11) angeordnet ist.

14. Schneckenzentrifuge nach einem der vorstehenden Ansprüche 2, 3, oder 13, **dadurch gekennzeichnet, dass** die Getriebestufen (10, 12) der Getriebeanordnung (11) oder die beiden Getriebe der Getriebeanordnung auf den beiden axialen Seiten eines antriebsseitigen Trommellagers (4) angeordnet sind.

15. Schneckenzentrifuge nach einem der vorstehenden Ansprüche 2, 3, 13 oder 14, **dadurch gekennzeichnet, dass** die erste Getriebestufe als Mehrwellen-, insbesondere Vierwellengetriebe ausgebildet ist, das stillstehende Hohlwellen (17) aufweist, die mit einem Flanschabschnitt (24) drehfest an einer axialen Wandung (22) des Motorgehäuses (14) festgelegt ist.

## Claims

1. Helical conveyor centrifuge, in particular solid-bowl or screen-bowl helical conveyor centrifuge, comprising:
a) a rotatable drum (1) having a drum mounting with a bearing housing (6),
b) a rotatable helical conveyor (2) arranged within the drum (1),
c) a machine frame (21),
d) a centrifuge drive (3) for rotating drum (1) and helical conveyor (2), which is designed in such a way that a differential rotational speed can be set between the drum (1) and the helical conveyor (2),
e) the centrifuge drive (3) having the following:
1. at least one electric motor (7) designed at least to drive the drum (1) and
2. a gearbox arrangement (11),
**characterized in that**
f) the electric motor is constructed as an asynchronous motor (7), the motor rotor (8) of which is arranged directly on a revolving gearbox housing (9) of the gearbox arrangement (11), and
g) the stator winding (13) is arranged in a motor housing (14) which is connected to the bearing housing (6) of the drum mounting and/or the machine frame (21) so as to be fixed against rotation, and
h) the motor/drive housing (14) is of closed design.

2. Helical conveyor centrifuge according to Claim 1, **characterized in that** the gearbox arrangement (11) is constructed with two or more stages, wherein at least one or more gearbox stages (10) is/are arranged in the revolving housing (9).

3. Helical conveyor centrifuge according to one of the preceding claims, **characterized in that** the gearbox arrangement (11) has at least two gear mechanisms, wherein at least one or more gearbox stages are arranged in the revolving housing (9).

4. Helical conveyor centrifuge according to one of the preceding claims, **characterized in that** in addition to the electric motor (7) for driving the drum, a further electric motor (15), which is constructed as a control motor, is provided.

5. Helical conveyor centrifuge according to Claim 4, **characterized in that** the control motor (15) has an output shaft (16) which is arranged parallel to the drum axis of rotation.

6. Helical conveyor centrifuge according to either of Claims 4 and 5, **characterized in that** the control motor (15) is arranged parallel to the electric motor (7) in a plane with the latter.

7. Helical conveyor centrifuge according to one of the preceding Claims 4 - 6, **characterized in that** the control motor (15) is connected via a continuously variable transmission to an input shaft (20) of the gearbox arrangement (11).

8. Helical conveyor centrifuge according to one of the preceding claims, **characterized in that** the drive housing (14) is constructed with a protection class greater than IP 54.

9. Helical conveyor centrifuge according to one of the preceding claims, **characterized in that** the drive housing (14) or the motor chamber is constructed such that it can be inertized.

10. Helical conveyor centrifuge according to one of the preceding claims, **characterized in that** a cooling device is provided to cool the asynchronous electric motor (7).

11. Helical conveyor centrifuge according to Claim 10, **characterized in that** the cooling is embodied as a water cooling system.

12. Helical conveyor centrifuge according to Claim 10, **characterized in that** the cooling device is embodied as a forced ventilation system.

13. Helical conveyor centrifuge according to either of Claims 2 and 3, **characterized in that** the motor rotor (8) is arranged on the revolving common housing (9) of two gearbox stages of the multistage gearbox arrangement (11).

14. Helical conveyor centrifuge according to one of the preceding Claims 2, 3 or 13, **characterized in that** the gearbox stages (10, 12) of the gearbox arrangement (11) or the two gear mechanisms of the gearbox arrangement are arranged on the two axial sides of a drive-side drum bearing (4).

15. Helical conveyor centrifuge according to one of the preceding Claims 2, 3, 13 or 14, **characterized in that** the first gearbox stage is constructed as a multi-shaft, in particular four-shaft, gear mechanism which has stationary hollow shafts (17) which is fixed by a flange section (24) on an axial wall (22) of the motor housing (14) so as to be fixed against rotation.

## Revendications

1. Centrifugeuse à vis sans fin, en particulier à bol plein ou à bol perforé, avec :
a) un tambour (1) rotatif avec un appui de tambour comprenant un corps de palier (6),
b) une vis sans fin (2) rotative disposée à l'intérieur du tambour (1),
c) un bâti de machine (21),
d) un entraînement de centrifugeuse (3) destiné à faire tourner le tambour (1) et la vis sans fin (2), qui est conçu de manière à pouvoir établir une vitesse de rotation différente entre le tambour (1) et la vis sans fin (2),
e) dans laquelle l'entraînement de centrifugeuse (3) comprend :
1. au moins un moteur électrique (7) conçu au moins pour entraîner le tambour (1) et
2. une disposition d'engrenages (11),
**caractérisée en ce que** le
f) le moteur électrique est conçu comme un moteur asynchrone (7) dont le rotor (8) est disposé directement sur un carter d'engrenages tournant (9) de la disposition d'engrenages (11) et
g) l'enroulement de stator (13) est disposé dans un carter de moteur (14) qui est relié avec le corps de palier (6) de l'appui de tambour et/ou avec le bâti de machine (21) de manière solidaire en rotation, et
h) le carter de moteur/d'entraînement (14) est fermé.

2. Centrifugeuse à vis sans fin selon la revendication 1, **caractérisée en ce que** la disposition d'engrenages (11) est conçue avec un ou plusieurs étages, au moins un ou plusieurs étages d'engrenages (10) étant disposés dans le carter tournant (9).

3. Centrifugeuse à vis sans fin selon l'une des revendications précédentes, **caractérisée en ce que** la disposition d'engrenages (11) présente au moins deux engrenages, dont au moins un ou plusieurs étages sont disposés dans le carter tournant (9).

4. Centrifugeuse à vis sans fin selon l'une des revendications précédentes, **caractérisée en ce qu'**il est prévu, outre le moteur électrique (7) pour l'entraînement du tambour, un autre moteur électrique (15) qui est conformé comme un moteur à vitesse réglable.

5. Centrifugeuse à vis sans fin selon la revendication 4, **caractérisée en ce que** le moteur à vitesse réglable (15) présente un arbre de sortie (16) qui est disposé parallèlement à l'axe de rotation du tambour.

6. Centrifugeuse à vis sans fin selon l'une des revendications 4 ou 5, **caractérisée en ce que** le moteur à vitesse réglable (15) est disposé parallèlement au moteur électrique (7) dans le même plan que celui-ci.

7. Centrifugeuse à vis sans fin selon l'une des revendications 4 à 6, **caractérisée en ce que** le moteur à vitesse réglable (15) est relié par un entraînement à courroie avec un arbre d'entrée (20) de la disposition d'engrenages (11).

8. Centrifugeuse à vis sans fin selon l'une des revendications précédentes, **caractérisée en ce que** le carter d'entraînement (14) est réalisé avec un niveau de protection supérieur à IP 54.

9. Centrifugeuse à vis sans fin selon l'une des revendications précédentes, **caractérisée en ce que** le carter d'entraînement (14) ou le compartiment du moteur est conçu pour pouvoir être inertisé.

10. Centrifugeuse à vis sans fin selon l'une des revendications précédentes, **caractérisée en ce qu'**un dispositif de refroidissement est prévu pour refroidir le moteur électrique asynchrone (7).

11. Centrifugeuse à vis sans fin selon la revendication 10, **caractérisée en ce que** le refroidissement est conçu comme un refroidissement par eau.

12. Centrifugeuse à vis sans fin selon la revendication 10, **caractérisée en ce que** le dispositif de refroidissement est conçu comme une ventilation externe.

13. Centrifugeuse à vis sans fin selon l'une des revendications 2 ou 3, **caractérisée en ce que** le rotor du moteur (8) est disposé sur le carter tournant (9) commun de deux étages d'engrenages de la disposition d'engrenages (11) à plusieurs étages.

14. Centrifugeuse à vis sans fin selon l'une des revendications 2, 3 ou 13, **caractérisée en ce que** les étages d'engrenage (10, 12) de la disposition d'engrenages (11) ou les deux engrenages de la disposition d'engrenages sont disposés des deux côtés dans le sens axial d'un palier de tambour (4) du côté de l'entraînement.

15. Centrifugeuse à vis sans fin selon l'une des revendications 2, 3, 13 ou 14, **caractérisée en ce que** le premier étage d'engrenages est conçu comme un engrenage à plusieurs arbres, en particulier à quatre arbres, qui présente des arbres creux immobiles (17) fixés par une partie de bride (24) sur une paroi axiale (22) du carter de moteur (14) de manière solidaire en rotation.
